# EUROPEAN PATENT SPECIFICATION

(11) **EP 4 427 286 B1**
(45) Date of publication and mention of the grant of the patent: **29.10.2025**
(21) Application number: 21809935.6
(22) Date of filing: 03.11.2021
(51) Int. Cl.: H01M 8/04302, H01M 8/04537, H01M 8/04992, H01M 8/249

(54) **A METHOD FOR DETERMINING A STARTING SEQUENCE FOR A FUEL CELL ARRANGEMENT COMPRISING A PLURALITY OF FUEL CELL SYSTEMS BASED ON SHUTDOWN DURATION TIME**
VERFAHREN ZUR BESTIMMUNG EINER STARTREIHENFOLGE FÜR EINE BRENNSTOFFZELLENANORDNUNG AUS EINER MEHRZAHL VON BRENNSTOFFZELLMODULEN BASIEREND AUF DER STILLSTANDSDAUER
PROCÉDÉ POUR DÉTERMINER LA SÉQUENCE DE DÉMARRAGE DANS UN ARRANGEMENT DE PILES À COMBUSTIBLE COMPRENANT PLUSIEURS MODULES BASÉ SUR LA DURÉE D'ARRÊT

(43) Date of publication of application: 11.09.2024
(73) Proprietor: VOLVO TRUCK CORPORATION, 405 08 Göteborg (SE)
(72) Inventor: ARYA, Pranav, 437 42 Lindome (SE); LINDBERG, Johan, 415 24 Göteborg (SE); KLÜPPEL SMIJTINK, Rafael, 412 60 Göteborg (SE); AXELSSON, Bengt, 421 65 Västra Frölunda (SE); JONSSON HOLM, Erik, 414 57 Göteborg (SE); HUSBERG, Tobias, 442 93 Kareby (SE)
(74) Representative: Kransell & Wennborg KB
(86) International application number: PCT/EP2021/080430
(87) International publication number: WO 2023/078536

(56) References cited:
- EP-A1- 2 908 372
- EP-A1- 3 346 535
- EP-A1- 3 817 111
- DE-A1- 102018 218 086

## Description

### TECHNICAL FIELD

The invention relates to a method for determining a starting sequence for a fuel cell arrangement comprising a plurality of fuel cell systems. The invention also relates to a method for controlling a fuel cell arrangement, a control unit, a vehicle, a computer program and to a computer readable medium.

The invention can be applied in heavy-duty vehicles, such as trucks, buses and construction equipment, as well as for marine applications and/or industrial applications. Although the invention will be described with respect to a truck, the invention is not restricted to this particular vehicle, but may also be used in other vehicles such as passenger cars.

### BACKGROUND

A fuel cell is an electrochemical cell which converts chemical energy into electricity. The fuel cell converts the chemical energy of a fuel, typically hydrogen, and an oxidizing agent, typically oxygen, into electricity.

Conventionally, several unit fuel cells are arranged together in fuel cell stacks. The fuel cell stack or stacks may be integrated in a fuel cell system, so to provide the voltage and power levels required for different applications of use. As such, the fuel cell system may comprise elements for providing the fuel cell stack with the necessary supply of fuel, such as hydrogen, and air, as well as elements e.g. for cooling or heating the fuel cell stack. Further, the fuel cell system may comprise additional components such as compressors, pumps, sensors, valves etc.

Accordingly, a fuel cell system can be used as an alternative or as a complement to electric batteries. In recent years fuel cell systems have been considered for powering electric vehicles, such as pure electric vehicles and hybrid electric vehicles.

For certain applications, one single fuel cell system is not sufficient to provide the amount of power. Typically, one single fuel cell system may provide 100 to 200 kW, meaning that in applications requiring higher power, more than one fuel cell system may be provided in a fuel cell arrangement.

In such fuel cell arrangements comprising a plurality of fuel cell systems, the requirement for high power may not be constant. I.e. when operating the fuel cell arrangement, it may be determined whether one or more of the plurality of fuel cell systems should be operated so as to meet a prevailing power demand. Accordingly, in a fuel cell arrangement comprising a plurality of fuel cell systems, there is a need to determine when to start and/or stop each individual fuel cell system, so as to provide a requested power from the fuel cell arrangement.

A fuel cell system which comprises one or more fuel cells is prone to degradation due to start up and shutdown of the system. It is known that degradation increases with longer shutdown durations. Hence, there is a desire to control a fuel cell arrangement comprising a plurality of fuel cell systems in a manner so as to take the degradation of the fuel cell systems into account. DE 102018218086A1 describes the successive starting of fuel cell modules depending on their degradation status for satisfying a requested load.

In view of the above, there is a strive to develop improved fuel cell related technology which takes at least some of the above concerns into account.

### SUMMARY

An object of the invention is to provide an improved method for operating a fuel cell arrangement which provides an advantage and/or an alternative in view of the issues mentioned in the above.

Hence, an object of the invention may be to provide an improved or alternative method for operating a fuel cell arrangement comprising a plurality of fuel cell systems, which takes the degradation of the fuel cell systems into account. Yet further objects of the invention are to provide an improved or alternative control unit for operating a fuel cell arrangement, an improved or alternative vehicle, and an improved or alternative computer program and/or computer readable medium.

According to a first aspect of the invention, at least one of the objects is achieved by a method according to claim 1.

Thus, a method for determining a starting sequence for a fuel cell arrangement comprising a plurality of fuel cell systems is provided. The method comprises the following information for each fuel cell system in the fuel cell arrangement: whether or not the fuel cell system should be started and, if the fuel cell system should be started, the starting time for the fuel cell system. The starting sequence is determined using the following as input:
- a power and/or energy need required from the fuel cell arrangement over an upcoming time range;
- a shutdown duration time of each fuel cell system, indicative of the time elapsed since the fuel cell system was lastly shutdown, and
- a predetermined degradation characteristic of each fuel cell system as a function of shutdown duration time.

By the provision of a method as disclosed herein, an improved method is achieved in which the degradation of the fuel cell systems in a fuel cell arrangement can be reduced. To this end, the method disclosed herein considers in particular the degradation which occurs when the fuel cell system is started up again after a shutdown period.

By studying a predetermined degradation characteristic of each fuel cell system in the fuel cell arrangement as a function of shutdown duration time, it is possible to determine whether or not to start each fuel cell system and, if the fuel cell system should be started, the starting time for the fuel cell system. With "starting time" is meant herein the point in time at which the fuel cell system should be started.

For example, the method is based on a realization that a permanent degradation of a fuel cell system increases with an increasing shutdown duration of the fuel cell system during an initial shutdown duration time period after stop of the fuel cell system. However, after this shutdown duration time period, the degradation reaches a constant level, and a further increase in the shutdown duration time does not significantly increase the permanent degradation of the fuel cell system.

As such, the determination of the starting sequence may for example be made so as to ensure that power and/or energy need required from the fuel cell system over an upcoming time range is provided, and with consideration to the degradation of the fuel cell systems as a function of shutdown duration time.

In another example, the determination of the starting sequence may be made so as not to provide the required power and/or energy need, but instead so as to save one or more of the fuel cell systems from permanent degradation.

The predetermined permanent degradation characteristic of a fuel cell system can be expressed as a function of the shutdown duration time of the fuel cell, wherein the shutdown duration time, or shutdown time period, is the duration from a point in time when the fuel cell is shut off to a later point in time when the fuel cell is restarted.

Accordingly, a shutdown duration time for the one or more fuel cell systems may be a time period from a point in time associated with when the one or more fuel cell systems is/are shut off to a later point in time associated with when the one or more fuel cell systems is/are restarted, wherein the point in time when the one or more fuel cell systems is/are restarted is associated with a specific degradation level for the one or more fuel cell systems.

The predetermined permanent degradation characteristic may comprise a Time Dependent Degradation time window (TDD) for the fuel cell system corresponding to the shutdown duration time of the fuel cell system after which the increase of a degradation value, indicative of the permanent degradation, is deemed insignificant, wherein the Time Dependent Degradation time window (TDD) is predetermined for the fuel cell system in the fuel cell arrangement.

As such, the Time Dependent Degradation time window (TDD) is preferably a time window from a first point in time associated with when the fuel cell system is shut off to a later second point in time associated with when the increase in the degradation level is deemed insignificant. For example, the second point in time may be a point in time when the degradation level reaches a first substantially constant degradation level. Accordingly, the degradation level is increasing during the Time Dependent Degradation time window, but stays on a constant level after the Time Dependent Degradation time window has passed.

Thus, for determining the starting sequence of the fuel cell arrangement, it may be considered whether the shutdown duration time of a fuel cell system is still within the Time Dependent Degradation time window, in which case starting the fuel cell system may limit the increasing permanent degradation, or if the shutdown duration time of a fuel cell system is outside of the Time Dependent Degradation time window, in which case a prolonged shutdown time will not significantly increase the permanent degradation.

Optionally, the Time Dependent Degradation time window may be predetermined using information regarding the fuel cell system, the information comprising one or more of information regarding: a fuel cell system design, an intended use of the fuel cell system, and/or the intended shutdown strategy of the fuel cell system. For example, the intended shutdown strategy may comprise intended strategies (normal, emergency fast) for different shutdowns and types of shutdowns of the fuel cell system.

The Time Dependent Degradation time window may be determined by modelling and/or estimating a permanent degradation characteristic as a curve over shutdown duration time of the fuel cell system, using information such as the one set out in the above. The permanent degradation characteristic as a curve over shutdown duration time may also be determined by empirical tests.

Optionally, the Time Dependent Degradation time window for the fuel cell system may be variable and varies with respect to detected and/or predicted ambient conditions, such as but not limited to ambient temperature and/or ambient humidity and/or ambient pressure. Thereby, a further improved method may be achieved which is better adapted to the ambient conditions, implying reduced degradation of the fuel cell system. For example, the Time Dependent Degradation time window for the fuel cell system may be predetermined using information regarding detected and/or predicted ambient conditions, such as ambient temperature and/or ambient humidity and/or ambient pressure.

Optionally, the starting sequence and/or the Time Dependent Degradation time window is determined taking a usage history of each fuel cell system into account.

Optionally, the usage history comprises one or more of the following: a last start time of each fuel cell system, indicative of the time elapsed since the fuel cell system was lastly started, a number of previous starts and stops of the fuel cell system, a number of operational hours of the fuel cell system, and/or a present permanent degradation of the fuel cell unit.

Optionally, the usage history may comprise the shutdown history of the fuel cell system. For example, the shutdown history may include information regarding the number of shutdowns and the type of shutdowns (normal, emergency, fast) which has previously occurred for the fuel cell system. For example, the shutdown history may include information regarding the type of the last shutdown of the fuel cell system.

Optionally, the starting sequence is determined such that each fuel cell system which should be started at a starting time for the fuel cell system is to continue its operation through the remainder of the upcoming time range after the starting time.

Optionally, the starting sequence is determined such that the power/energy need required from the fuel cell arrangement over the upcoming time range is delivered from the fuel cell arrangement.

Optionally, the starting sequence is determined taking information of the efficiency of the fuel cell system at different load levels into account.

For example, the starting sequence is determined considering a trade-off between efficiency and degradation, i.e. lifetime of the fuel cell system.

Optionally, the starting sequence may be determined taking a predetermined permanent degradation strategy for the fuel cell systems of the fuel cell arrangement into account.

For example, a predetermined permanent degradation strategy may be to operate all the fuel cell systems in the fuel cell arrangement aiming to achieve a low variation in their permanent degradation. As such, the fuel cell systems in the fuel cell arrangement may be maintained at relatively similar levels of permanent degradation. Optionally, a difference between the highest and lowest degradation values for the different fuel cell systems in the fuel cell arrangement is kept within a predetermined difference range.

In another example, a predetermined permanent degradation strategy may be to operate at least a first and a second fuel cell system in the fuel cell arrangement such that the first fuel cell system is subject to degradation before the second fuel cell system. As such, one fuel cell system in the fuel cell arrangement may be sacrificed to degrade earlier than another fuel cell system. Optionally, a difference between the highest and lowest degradation values for the different fuel cell systems in the fuel cell arrangement is allowed to exceed a predetermined difference value.

Optionally, the power/energy need required from the fuel cell arrangement is based on an estimated value of the power/energy need over the upcoming time range.

For example, such an estimated value may when the method is applied for a vehicle, be based on information regarding one or more of the following: environmental conditions (e.g. ambient temperature, wind), gross combination weight, route, set speed, traffic conditions.

Optionally, the power/energy need required from the fuel cell arrangement may be based on the estimated value plus a predetermined margin.

Optionally, the predetermined margin is determined using an estimation of the reliability of the estimated value of the power/energy need over the time interval. For example, the estimation may be an estimation based on a usage history of the fuel cell arrangement. For example, the estimation may be based on a comparison of the estimate power/energy need with the actually requested power/energy over the usage history of the fuel cell arrangement.

Optionally, one or more out of the plurality of fuel cell systems in the fuel cell arrangement may be different from one or more of the other fuel cell systems in the fuel cell arrangement. However, it is envisaged that for most applications, each one out of the plurality of fuel cell systems in the fuel cell arrangement may be similar the other fuel cell systems in the fuel cell arrangement.

In a second aspect, the object may be achieved by a method according to claim 17. Thus, there is provided a method for controlling a fuel cell arrangement comprising a plurality of fuel cell systems, the method comprising controlling the fuel cell systems in accordance with a starting sequence determined by the method according to the first aspect described in the above.

In a third aspect, the object may be achieved by a control unit according to claim 18. Thus, a control unit for controlling a fuel cell arrangement comprising a plurality of fuel cell systems is provided The control unit is configured to perform the steps of the method according to the first aspect described in the above. The control unit may be arranged to be in communication with the fuel cell arrangement.

Advantages and effects of the third aspect of the invention are largely analogous to the advantages and effects of the first and second aspects of the invention. Furthermore, all embodiments of the third aspect of the invention are combinable with all embodiments of the first and second aspects of the invention, and vice versa.

In a fourth aspect, the object may be achieved by a vehicle according to claim 19. Thus, a vehicle comprising a fuel cell arrangement comprising a plurality of fuel cell systems and/or being in communication with a control system according to the third aspect is provided.

Optionally, the power/energy need required from the fuel cell arrangement is based on an estimated value of the power/energy need over the upcoming time range, and wherein the estimated value is estimated using one or more of: estimated environmental conditions, estimated traffic conditions, estimated route of the vehicle, estimated speed of the vehicle. The estimated route of the vehicle may comprise e.g. topographical information and/or road surface information, and/or information regarding the distance to be travelled.

Optionally, the vehicle further comprises a battery, and the power and/or energy need is estimated using a present and/or estimated characteristic of the battery, such as the state of charge of the battery.

In a fifth aspect there is provided a computer program according to claim 22. Thus, a computer program comprising program code means for performing the method according to the first or second aspect when the program is run on the control unit of the third aspect.

In a sixth aspect there is provided a computer readable medium according to claim 23. Thus, there is provided a computer readable medium carrying a computer program comprising program code means for performing the method of the first or second aspect when the program product is run on the control unit of the third aspect.

Advantages and effects of the fourth, fifth and sixth aspects of the invention are largely analogous to the advantages and effects of the first and second aspects of the invention. Furthermore, all embodiments of the fourth, fifth and sixth aspects of the invention are combinable with all embodiments of the first and second aspects of the invention, and vice versa.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an example embodiment of the invention,
Fig. 2 is a schematic view of fuel cell arrangement adapted for use as a propulsion unit in a vehicle, according to an example embodiment of the invention,
Fig. 3a is a diagram illustrating degradation level as a function of shutdown time period of a fuel cell system according to a first example,
Fig. 3b is a diagram illustrating degradation level as a function of shutdown time period of a fuel cell system according to a second example, and
Fig. 4 is a flowchart of a method according to an example embodiment of the invention.

### DETAILED DESCRIPTION OF EXAMPLE EMBODIMENTS OF THE INVENTION

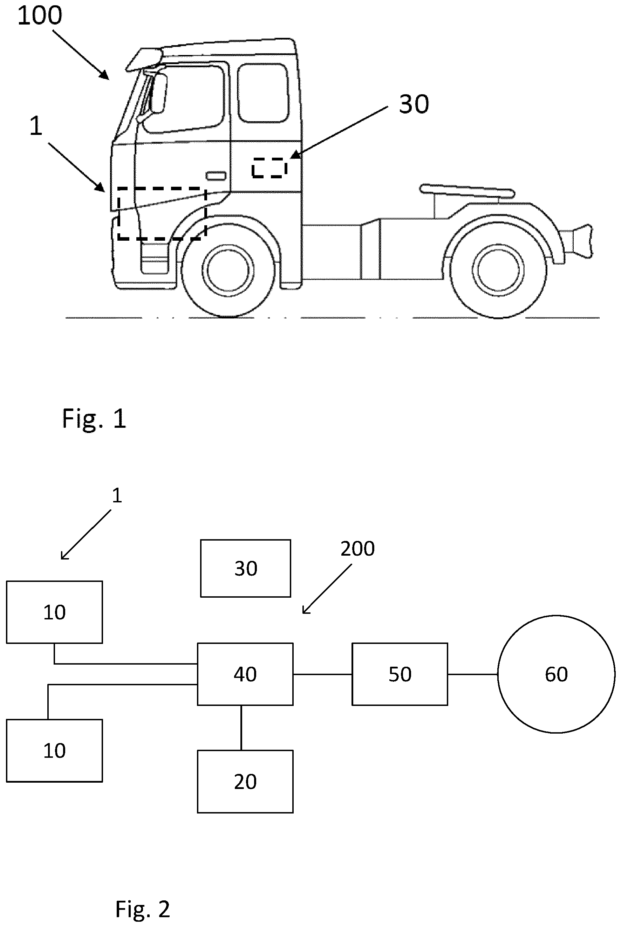

Fig. 1 depicts a side view of a vehicle 100 according to an example embodiment of the invention. The vehicle 100 is here a truck, more specifically a heavy-duty truck for towing one or more trailers (not shown). Even though a heavy-duty truck 100 is shown it shall be noted that the invention is not limited to this type of vehicle but may be used for any other type of vehicle, such as a bus, construction equipment, e.g. a wheel loader and an excavator, and a passenger car. The invention is also applicable for other applications not relating to vehicles as long as a fuel cell system is utilized. However, the invention has shown to be particularly advantageous for vehicles since vehicles are frequently shut down and restarted during use.

The vehicle 100 comprises a fuel cell arrangement 1. The fuel cell arrangement 1 is here used for powering one or more electric motors (not shown) which are used for creating a propulsion force to the vehicle 100. The fuel cell arrangement 1 may additionally or alternatively be used for powering other electric power consumers of the vehicle 100, such as an electric motor for a refrigerator system, an electric motor for an air conditioning system or any other electric power consuming function of the vehicle 100.

The vehicle 100 further comprises a control unit 30 according to an example embodiment of the invention. The control unit 30 is thus used for operating the fuel cell arrangement 1. Even though an on-board control unit 30 is shown, it shall be understood that the control unit 30 could also be a remote-control unit 30, i.e., an off-board control unit, or a combination of an on-board and off-board control unit. The control unit 30 may be configured to control the fuel cell system 1 by issuing control signals and by receiving status information relating to the fuel cell system 1.

The control unit 30 is an electronic control unit and may comprise processing circuitry which is adapted to run a computer program as disclosed herein. The control unit 30 may comprise hardware and/or software for performing the method according to the invention. In an embodiment the control unit 30 may be denoted a computer. The control unit 30 may be constituted by one or more separate sub-control units. In addition, the control unit 30 may communicate by use of wired and/or wireless communication means.

Fig. 2 depicts a schematic illustration of a fuel cell arrangement 1 according to an example embodiment of the invention, wherein the fuel cell arrangement 1 is arranged for propulsion of a vehicle, such as the vehicle 100 as shown in fig. 1.

The fuel cell arrangement 1 comprises a plurality of fuel cell systems 10. For example, and as illustrated in Fig. 2, the fuel cell arrangement may comprise two fuel cell systems 10. However, it is envisaged that three, four our more fuel cell systems 10 may be comprised in the fuel cell arrangement 1.

The plurality of fuel cell systems 10 of the fuel cell arrangement 1 may, as illustrated in Fig. 2, be connected to a propulsion system 200 of a vehicle. As such, the plurality of fuel cell systems 10 may be connected to a junction box 40, which is arranged to transmit power from one or more of the fuel cell systems 10 to a propulsion arrangement 60 of a vehicle, for example to the traction wheels of a vehicle. One or more electric and/or mechanical devices 50 may for example be arranged between the junction box 40 and the propulsion arrangement 60. Further, and as illustrated in Fig. 2, the junction box 40 may be connected to one or more batteries 20 providing auxiliary power to the propulsion arrangement 60.

In addition, a control unit 30 is arranged for controlling the fuel cell arrangement 1 using a starting sequence as determined by the method described herein.

As such, the method for determining a starting sequence for a fuel cell arrangement 1 comprising a plurality of fuel cell systems 10, comprises determining a starting sequence comprising the following information for each fuel cell system 10 in the fuel cell arrangement 1: whether or not the fuel cell system 10 should be started and, if the fuel cell system 10 should be started, the starting time for the fuel cell system 10.

Thus, the starting sequence may for example be used by the control unit 30 to determine which out of the plurality of fuel cell systems 10 to start, and the starting time for the fuel cells 10 to be started.

The starting sequence is determined taking the following into account:
- a power and/or energy need required from the fuel cell arrangement 1 over an upcoming time range;
- a shutdown duration time of each fuel cell system 10, indicative of the time elapsed since the fuel cell system 10 was lastly shutdown, and
- a predetermined degradation characteristic of each fuel cell system 10 as a function of shutdown duration time.

The power and/or energy need required from the fuel cell arrangement 1 over an upcoming time range may be received in the form of a power and/or energy request, such as a power and/or energy request required to drive a vehicle 100. As such, the power and/or energy need may for example be predicted based on one or more of the following inputs: present or predicted environmental conditions (e.g. weather conditions, such as ambient temperature and/or wind conditions), gross weight of the vehicle, route of the vehicle, the set or predicted speed of the vehicle, present or predicted traffic conditions.

Further, the power and/or energy need required from the fuel cell arrangement 1 may be depending on the condition of other power and/or energy providing devices, such as the condition of one or more batteries 20. As such, the power and/or energy need required from the fuel cell arrangement 1 may be estimated using characteristics of one or more batteries 20 arranged to supply power and/or energy. Such characteristics may for example be the state of charge of the one or more batteries 20.

Thus, the power and/or energy need required from the fuel cell arrangement over an upcoming time range would correspond to the demand of power and/or energy for the intended use of the fuel cell arrangement, such as for example the demand for propulsion of a vehicle.

As intimated in the above, the power/energy need required from the fuel cell arrangement 1 may thus be based on an estimated value of the power/energy need over the upcoming time range.

Optionally, the power/energy need required from the fuel cell arrangement 1 may however be based on such an estimated value plus a predetermined margin.

Using such a predetermined margin may allow the method to be adjusted for inaccuracies in the power/energy need estimations. As such, the margin may be a controllable parameter which may be set higher when the confidence in the estimated value of the power/energy need is lower, and lower when the confidence in the estimated value of the power/energy need is higher. Generally, overestimating the power/energy need is preferred to underestimating the power/energy need.

Generally, when at least two fuel cell systems will be required to supply power/energy over the upcoming time range, it may be preferred to operate both fuel cell systems from the start rather than to start with one single fuel cell system and then start the other fuel cell system at a later point in time. This is because from an efficiency point of view it may be preferred to operate two fuel cell systems at lower power instead of one fuel cell system at a higher power. The margin may be a controllable parameter which enables setting a desired trade-off between efficiency and lifetime of the fuel cell arrangement 1.

The predetermined margin may for example be determined using an estimation of the reliability of the estimated value of the power/energy need over the time interval. For example, the estimation of the reliability may be an estimation based on a usage history of the fuel cell arrangement 1.

In addition to the power/energy need required by the fuel cell arrangement 1 over the upcoming time range, the starting sequence is determined taking the shutdown duration time of each fuel cell system 10 into account. The shutdown duration time is indicative of the time elapsed since the fuel cell system 10 was lastly shutdown.

The shutdown duration time may for example be determined by registering the shutdown time of a fuel cell system 10 and/or by starting a clock at the shutdown time of the fuel cell system. Alternatively, the shutdown duration time could be determined using other input such as e.g. the last start-up time of the fuel cell system 10 in combination with the last operation duration of the fuel cell system 10.

Moreover, the starting sequence is determined taking a predetermined degradation characteristic of each fuel cell system 10 as a function of shutdown duration time into account.

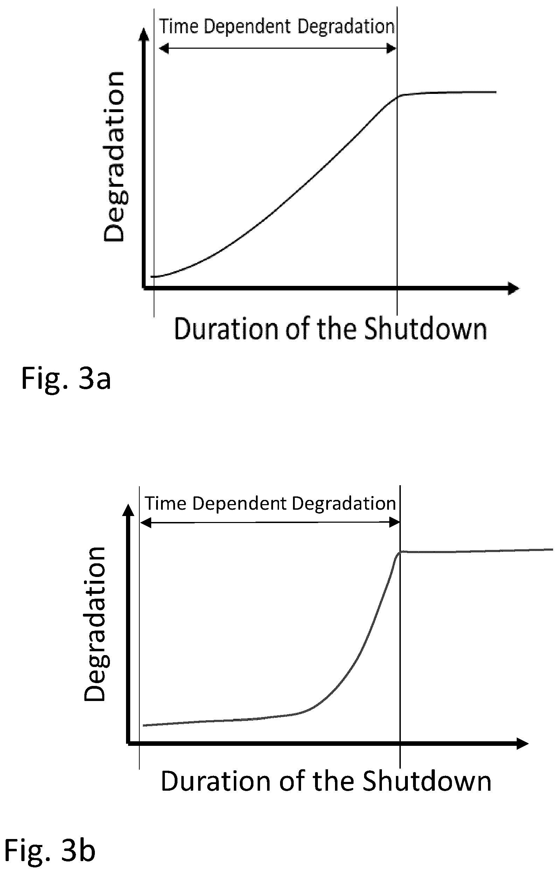

As exemplified by the diagram of Fig. 3a for an example fuel cell system 10, a fuel cell system 10 exhibits a permanent degradation when turned on again after a period of shutdown, i.e. a shutdown duration time. The permanent degradation increases with the shutdown duration time until it reaches a plateau value, whereafter the permanent degradation remains substantially the same with further increased shutdown duration time. Hence, a Time Dependent Degradation time window extends in time from the shutdown of the fuel cell system 10 until the point in time when the plateau permanent degradation is reached.

In Fig. 3a, the shutdown duration time is indicated on the horizontal axis, and the permanent degradation of the fuel cell system 10 on the vertical axis. In this example, the permanent degradation increases relatively constantly with increasing shutdown duration time, until a plateau degradation value is reached, whereafter increasing shutdown duration results in very little change, i.e. the increase of the permanent degradation value is deemed insignificant. Hence, and as illustrated in Fig. 3a, the Time Dependent Degradation time window extends from the shutdown time of the fuel cell system 10 until the shutdown duration time at which the plateau degradation value is reached.

The permanent degradation as a function of shutdown duration time will vary between different fuel cell systems and thus the Time Dependent Degradation time window may be dependent on a number of factors such as the design of the fuel cell system 10, types of shutdowns and intended strategies for different shutdowns, the intended use of the fuel cell system etc. The permanent degradation curve may be modelled and/or estimated from such factors and may be evaluated using empirical knowledge and/or experiments. Thus, the Time Dependent Degradation time window may be determined for a fuel cell arrangement 1 comprising a plurality of fuel cells 10.

For example, Fig. 3b illustrates another example of the permanent degradation as a function of the shutdown duration time for another example of a fuel cell system 10. In this example, the permanent degradation increases relatively slowly with increasing shutdown duration time during an initial shutdown duration time period. Thereafter, the permanent degradation increases at a much quicker rate until a plateau degradation value is reached. After the plateau value is reached, increasing shutdown duration results in no or very little change, i.e. substantially no further increase of the permanent degradation. Hence, and as illustrated in Fig. 3b, the Time Dependent Degradation time window extends from the shutdown time of the fuel cell system 10 until the shutdown duration time at which the plateau degradation value is reached.

As intimated in the above, the method proposed herein comprises determining a starting sequence taking a predetermined degradation characteristic of each fuel cell system 10 as a function of shutdown duration time into account. Thus, the predetermined permanent degradation characteristic may for example comprise a Time Dependent Degradation time window TDD for the fuel cell system 10 corresponding to the shutdown duration time of the fuel cell system after which the increase of a degradation value, indicative of the permanent degradation, is deemed insignificant. The Time Dependent Degradation time window (TDD) may be predetermined for the fuel cell system 10 in the fuel cell arrangement 1.

For example, the Time Dependent Degradation time window (TDD) may be predetermined using information regarding the fuel cell arrangement 1 and/or fuel cell system 10, the fuel cell system design, a number of fuel cell systems 10 in the fuel cell arrangement 1, an intended use of the fuel cell system 10, the shutdown history of the fuel cell system and/or historical data. For example, different types of shutdown of the fuel cell system 10 may result in different shape and characteristics of the degradation curve for the same fuel cell system 10. Accordingly, when the determining the Time Dependent Degradation time window (TDD), for example an intended shutdown strategy of the fuel cell system 10 may be considered. For example, the Time Dependent Degradation time window (TDD) may be determined by empirical tests.

In view of the above, it is realised that for example if for determining the starting sequence a selection is to be made between starting a first fuel cell system for which the current shutdown duration time is within the Time Dependent Degradation time window, and a second fuel cell system for which the current shutdown duration time is already past the Time Dependent Degradation time window, it may be preferred to start the first fuel cell system, since this will mean that the degradation of the first fuel cell is limited. If instead selecting to start the second fuel cell system, there will be no reduction of the degradation of the second fuel cell, whereas the degradation of the first fuel cell will continue.

In addition to the predetermined degradation characteristic being dependent on the shutdown duration time, such as the Time Dependent Degradation time window, the method may take information relating to other parameters relevant for the degradation status of a fuel cell system 10 into account.

For example, the starting sequence may be further determined taking a usage history of each fuel cell system 10 into account. Such a usage history may comprise one or more of the following: a last start time of each fuel cell system, indicative of the time elapsed since the fuel cell system was lastly started, a number of previous starts and stops of the fuel cell system 10, a shutdown history of the fuel cell system 10, a number of operational hours of the fuel cell system 10, and/or a present permanent degradation of the fuel cell system 10. A shutdown history of the fuel cell system 10 may comprise the type of starts and stops of the fuel cell system 10. Each of these parameters may influence the degradation of the fuel cell system 10, and hence may be taken into account when determining the starting sequence with the aim of controlling degradation.

Since as mentioned in the above, the number of starts and stops of a fuel cell system 10 may influence the degradation of the fuel cell system 10 such that the degradation may increase with an increasing number of starts and stops, it may be desired to limit the starts and stops of the fuel cell system 10.

Thus, the starting sequence may be further determined such that each fuel cell system 10 which should be started at a starting time for the fuel cell system is to continue its operation through the remainder of the upcoming time ranges after the starting time. In other words, a fuel cell system 10 which is started is not stopped until at the end of the upcoming time range.

Further, the starting sequence may be determined such that the power/energy need required from the fuel cell arrangement 1 over the upcoming time range is indeed delivered from the fuel cell arrangement 1. In this case, it may be that the fuel cell arrangement 1 is able to meet the power/energy need without exceeding any possible limits set for acceptable degradation of the fuel cell system or systems 10, or that the fuel cell arrangement 1 is set to meet the power/energy need even if it results in a relatively severe permanent degradation of the fuel cell systems 10.

In another variant, the starting sequence may be determined so as to maintain the degradation of the fuel cell system or systems 10 within predefined limits, and, if the power/energy need cannot be satisfied within these limits, the fuel cell arrangement 1 be set to deliver less power/energy than what is required to fulfil the need.

Further, the starting sequence may be determined taking information of the efficiency of the fuel cell system 10 at different power levels into account. To this end, the fuel cell system efficiency as a function of the load on the fuel cell system 10 may be taken into account. As such, the starting sequence may be determined considering also efficiency of the fuel cell system 10 versus degradation.

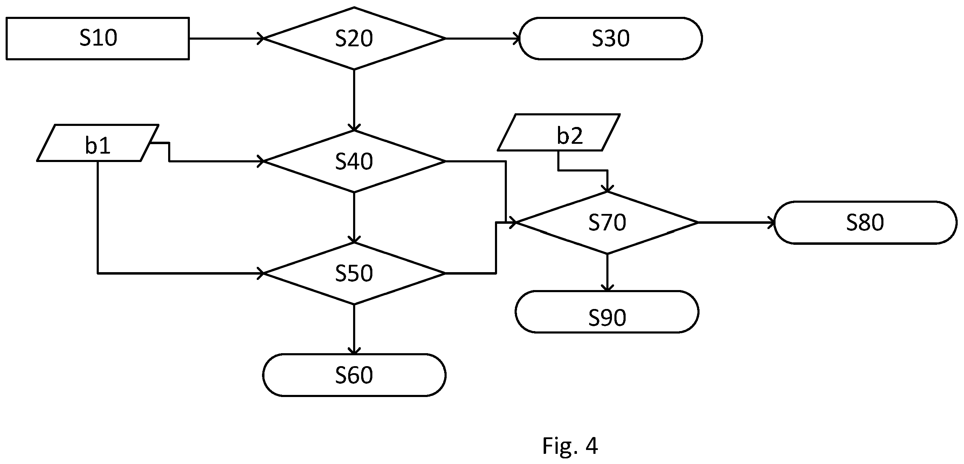

Fig. 4 is a flow-chart of an example of a method for controlling a fuel cell arrangement 1, comprising an example of a method for determining a starting sequence. In this example, the fuel cell arrangement 1 comprises a first fuel cell system 10 and a second fuel cell system 10. Thus, the fuel cell arrangement 1 may for example be a fuel cell arrangement 1 as described in relation to Fig. 2.

First, in S10, a power/energy need over an upcoming time range is estimated, resulting in an estimated power/energy need. A first tunable control parameter is applied so as to add a margin to the originally estimated power/energy need. As explained in the above, the margin may be selected based on the performance of the power/energy estimation methods.

Further, a second tunable control parameter may be applied to the estimated power/energy need so as to account for the difference in efficiency of the fuel cell systems 10 at low power operation and at high power operation.

The power and/or energy need resulting from the estimation with the further application of the first and second tunable control parameters is now used as the power and/or energy need required from the fuel cell arrangement 1 over the upcoming time range, and supplied to the method in step S20.

Step S20 comprises controlling if the power and/or energy need required from the fuel cell arrangement 1 is greater than the power/energy which may be provided by a single one out of the first and second fuel cell systems 10. If the answer is yes, the method goes on to step S30, wherein both the first and the second fuel cell system 10 is started.

If the answer is no, i.e. the power and/or energy need required from the fuel cell arrangement 1 is not greater than the power/energy which may be provided by a single one out of the first and second fuel cell systems, the method goes to step S40. S40 utilises information received from b1, indicting the shutdown duration time of the first fuel cell system 10 and the shutdown duration time of the second fuel cell system 10. Optionally, information received from b1 may further indicate other information, such as the shutdown type of the last shutdown of the fuel cell system 10. In step S40, it is checked whether the shutdown duration times of both fuel cell systems 10 are within the Time Dependent Degradation time window. If the answer is no, i.e. if at least one of the two fuel cell systems 10 is outside of the Time Dependent Degradation time window, the system goes on to step S50. In step S50, it is checked whether the shutdown duration times of both fuel cell systems 10 are outside of the Time Dependent Degradation time window. If the answer is no, this indicates that one of the fuel cell systems 10 has a shutdown duration time within the Time Dependent Degradation time window, whereas the other is outside of the Time Dependent Degradation time window. Accordingly, in this situation, the system goes on to step S60, which comprises starting the fuel cell system 10 for which the shutdown duration time is in the TDD time window.

If both fuel cell systems 10 have shutdown duration times within the TDD time window, the method goes from step S50 to step S70. Similarly, if in step S40, it is found that the shutdown duration times of both fuel cell systems 10 are within the Time Dependent Degradation time window, the method goes from step S40 to step S70.

In step S70, information regarding the respective usage history of the two fuel cell systems 10 is received from b2. If the usage histories received indicates that the first of the fuel cell systems 10 has been used more than the second of the fuel cell systems 10, the method goes from step S70 to step S80 comprising starting the second fuel cell system 10. If however the usage histories indicates that the first of the fuel cell systems 10 has been used less than the second of the fuel cell systems 10, the method goes from S70 to step S90, comprising starting the first fuel cell system.

The method as outlined in Fig. 4 may be expanded for three or more fuel cell systems, utilising the same basic principles.

The starting sequence may be determined taking a predetermined permanent degradation strategy for the fuel cell systems 10 of the fuel cell arrangement 1 into account. Thus, as in the example of Fig. 4, the predetermined degradation strategy may be to operate all the fuel cell systems 10 in the fuel cell arrangement 1 aiming to achieve a low variation in the permanent degradation. For example, the permanent degradation strategy may be to operate all the fuel cell systems 10 in the fuel cell arrangement 1 such that a difference between the highest and lowest degradation values for the different fuel cell systems 10 in the fuel cell arrangement 1 is kept within a predetermined difference range. In the method described with reference to Fig. 4 it may for example be noted that, if both fuel cell systems 10 have shutdown duration times being inside the TDD time window or if both fuel cell systems 10 have shutdown duration times being outside the TDD time window, it is selected to use the fuel cell system which has been used the least, as indicated by the usage history. Thus, the method aims to achieve a low variation between the fuel cell systems 10 of the fuel cell arrangement 1. This means that the fuel cell systems 10 of the fuel cell arrangement 1 will degrade, i.e. age in a relatively similar manner over time.

However, another option is that the predetermined permanent degradation strategy is to operate at least a first and a second fuel cell system 10 in a fuel cell arrangement 1 such that the first fuel cell system 10 is subject to degradation before the second fuel cell system 10. This strategy means that the first fuel cell system 10 is sacrificed before the second fuel cell system 10. The result would be that the first fuel cell system 10 will degrade, i.e. age, faster than the second fuel cell system 10 over time. Such a strategy may be selected for example if it is desired to ensure that there is always a well-functioning, i.e. not severely degraded, fuel cell system 10 available in the fuel cell arrangement 1. For example, such a predetermined permanent degradation strategy may be such that a difference between the highest and lowest degradation values for the different fuel cell systems 10 in the fuel cell arrangement 1 is allowed to exceed a predetermined difference value.

It is to be understood that the present invention is not limited to the embodiments described above and illustrated in the drawings; rather, the skilled person will recognize that many changes and modifications may be made within the scope of the appended claims.

## Claims

1. A method for determining a starting sequence for a fuel cell arrangement (1) comprising a plurality of fuel cell systems (10), said starting sequence comprising the following information for each fuel cell system (10) in said fuel cell arrangement (1): whether or not the fuel cell system (10) should be started and, if the fuel cell system (10) should be started, the starting time for the fuel cell system (10), said starting sequence being determined using the following as input:
- a power and/or energy need required from the fuel cell arrangement (1) over an upcoming time range;
- a shutdown duration time of each fuel cell system (10), indicative of the time elapsed since the fuel cell system (10) was lastly shutdown, and
- a predetermined degradation characteristic of each fuel cell system (10) as a function of shutdown duration time.

2. The method according to claim 1, wherein said predetermined permanent degradation characteristic comprises a Time Dependent Degradation time window (TDD) for the fuel cell system (10) corresponding to the shutdown duration time of the fuel cell system (10) after which the increase of a degradation value, indicative of the permanent degradation, is deemed insignificant, wherein said Time Dependent Degradation time window (TDD) is predetermined for the fuel cell system (10) in said fuel cell arrangement (1).

3. The method according to claim 2, wherein said Time Dependent Degradation time window (TDD) is predetermined using information regarding said fuel cell arrangement (1) and/or fuel cell system (10) comprising one or more of: a fuel cell system design, a number of fuel cell systems (10) in the fuel cell arrangement (1), an intended use of the fuel cell system (10), and/or an intended shutdown strategy of the fuel cell system (10).

4. The method according to any one of the claims 1 to 3, wherein said starting sequence is determined taking a usage history of each fuel cell system (10) into account and/or said Time Dependent Degradation time window (TDD) is predetermined using information regarding said fuel cell system (10) comprising a usage history of said fuel cell system (10).

5. The method according to any one of the preceding claims, wherein said starting sequence is determined such that each fuel cell system (10) which should be started at a starting time for said fuel cell system (10) is to continue its operation through the remainder of said upcoming time range after said starting time.

6. The method according to any one of the previous claims, wherein said starting sequence is determined such that said power/energy need required from the fuel cell arrangement (1) over said upcoming time range is delivered from said fuel cell arrangement (1).

7. Method according to any one of the previous claims, wherein said starting sequence is determined taking information of the efficiency of the fuel cell system (10) at different operation power levels into account.

8. The method according to any one of the previous claims, wherein said starting sequence is further determined taking a predetermined permanent degradation strategy for the fuel cell systems (10) of the fuel cell arrangement (1) into account.

9. The method according to any one of the preceding claims, wherein said power/energy need required from the fuel cell arrangement (1) is based on an estimated value of said power/energy need over said upcoming time range.

10. The method according to claim 9, wherein said power/energy need required from the fuel cell arrangement (1) is based on said estimated value plus a predetermined margin.

11. Method for controlling a fuel cell arrangement (1) comprising a plurality of fuel cell systems (10), the method comprising controlling the fuel cell systems (10) in accordance with a starting sequence determined by the method according to any one of the claims 1 to 10.

12. Control unit for controlling a fuel cell arrangement (1) comprising a plurality of fuel cell systems (10), said control unit (30) being configured to perform the steps of the method according to any one of the previous claims, said control unit (30) being in communication with said fuel cell arrangement (1).

13. Vehicle comprising a fuel cell arrangement (1) comprising a plurality of fuel cell systems (10) and being in communication with a control unit (30) according to claim 12.

14. A computer program comprising program code means for performing the method of any of claims 1-11 when said program is run on the control unit of claim 12.

15. A computer readable medium carrying a computer program comprising program code means for performing the method of any of claims 1-11 when said program product is run on the control unit of claim 12.

## Patentansprüche

1. Verfahren zur Bestimmung einer Startreihenfolge für eine Brennstoffzellenanordnung (1) aus einer Mehrzahl von Brennstoffzellenmodulen (10), wobei die Startreihenfolge für jedes Brennstoffzellenmodul (10) in der Brennstoffzellenanordnung (1) die folgenden Informationen umfasst: ob das Brennstoffzellenmodul (10) gestartet werden soll oder nicht, und, wenn das Brennstoffzellenmodul (10) gestartet werden soll, den Startzeitpunkt für das Brennstoffzellenmodul (10), wobei die Startreihenfolge unter Verwendung des Folgenden als Eingabe bestimmt wird:
- einen Leistungs- und/oder Energiebedarf, der von der Brennstoffzellenanordnung (1) in einem anstehenden Zeitbereich benötigt wird;
- eine Abschaltdauer jedes Brennstoffzellenmoduls (10), die die Zeit angibt, die seit dem letzten Abschalten des Brennstoffzellenmoduls (10) verstrichen ist, und
- eine vorbestimmte Abbaucharakteristik jedes Brennstoffzellenmoduls (10) als Funktion der Abschaltdauer.

2. Verfahren nach Anspruch 1, wobei die vorbestimmte permanente Abbaucharakteristik ein zeitabhängiges Abbauzeitfenster (TDD) für das Brennstoffzellenmodul (10) umfasst, das der Abschaltdauer des Brennstoffzellenmoduls (10) entspricht, nach der der Anstieg eines Abbauwerts, der den permanenten Abbau anzeigt, als unbedeutend angesehen wird, wobei das zeitabhängige Abbauzeitfenster (TDD) für das Brennstoffzellenmodul (10) in der Brennstoffzellenanordnung (1) vorbestimmt ist.

3. Verfahren nach Anspruch 2, wobei das zeitabhängige Abbauzeitfenster (TDD) unter Verwendung von Informationen bezüglich der Brennstoffzellenanordnung (1) und/oder des Brennstoffzellenmoduls (10) vorbestimmt wird, die eines oder mehrere der folgenden Elemente umfassen: ein Brennstoffzellenmoduldesign, eine Mehrzahl von Brennstoffzellenmodulen (10) in der Brennstoffzellenanordnung (1), eine beabsichtigte Verwendung des Brennstoffzellenmoduls (10) und/oder eine beabsichtigte Abschaltstrategie des Brennstoffzellenmoduls (10).

4. Verfahren nach einem der Ansprüche 1 bis 3, wobei die Startreihenfolge unter Berücksichtigung eines Nutzungsverlaufs jedes Brennstoffzellenmoduls (10) bestimmt wird und/oder das zeitabhängige Abbauzeitfenster (TDD) unter Verwendung von Informationen über das Brennstoffzellenmodul (10), die einen Nutzungsverlauf des Brennstoffzellenmoduls (10) umfassen, vorbestimmt wird.

5. Verfahren nach einem der vorhergehenden Ansprüche, wobei die Startreihenfolge so bestimmt wird, dass jedes Brennstoffzellenmodul (10), das zu einem Startzeitpunkt für das Brennstoffzellenmodul (10) gestartet werden sollte, seinen Betrieb während des restlichen anstehenden Zeitbereichs nach dem Startzeitpunkt fortsetzen soll.

6. Verfahren nach einem der vorhergehenden Ansprüche, wobei die Startreihenfolge so bestimmt wird, dass der von der Brennstoffzellenanordnung (1) während des restlichen anstehenden Zeitbereichs benötigte Leistungs-/Energiebedarf von der Brennstoffzellenanordnung (1) geliefert wird.

7. Verfahren nach einem der vorhergehenden Ansprüche, wobei die Startreihenfolge unter Berücksichtigung von Informationen über den Wirkungsgrad des Brennstoffzellenmoduls (10) bei unterschiedlichen Betriebsleistungsniveaus bestimmt wird.

8. Verfahren nach einem der vorhergehenden Ansprüche, wobei die Startreihenfolge ferner unter Berücksichtigung einer vorbestimmten permanenten Abbaustrategie für die Brennstoffzellenmodule (10) der Brennstoffzellenanordnung (1) bestimmt wird.

9. Verfahren nach einem der vorhergehenden Ansprüche, wobei der von der Brennstoffzellenanordnung (1) benötigte Leistungs-/Energiebedarf auf einem geschätzten Wert des Leistungs-/Energiebedarfs in dem anstehenden Zeitbereich basiert.

10. Verfahren nach Anspruch 9, wobei der von der Brennstoffzellenanordnung (1) benötigte Leistungs-/Energiebedarf auf dem geschätzten Wert plus einer vorbestimmten Marge basiert.

11. Verfahren zur Steuerung einer Brennstoffzellenanordnung (1), die eine Mehrzahl von Brennstoffzellenmodulen (10) umfasst, wobei das Verfahren die Steuerung der Brennstoffzellenmodule (10) gemäß einer durch das Verfahren nach einem der Ansprüche 1 bis 10 bestimmten Startreihenfolge umfasst.

12. Steuereinheit zur Steuerung einer Brennstoffzellenanordnung (1), die eine Mehrzahl von Brennstoffzellenmodulen (10) umfasst, wobei die Steuereinheit (30) konfiguriert ist, um die Schritte des Verfahrens nach einem der vorhergehenden Ansprüche durchzuführen, wobei die Steuereinheit (30) mit der Brennstoffzellenanordnung (1) in Verbindung steht.

13. Fahrzeug mit einer Brennstoffzellenanordnung (1) die eine Mehrzahl von Brennstoffzellenmodulen (10) umfasst und mit einer Steuereinheit (30) nach Anspruch 12 in Verbindung steht.

14. Computerprogramm mit Programmcodemitteln zum Durchführen des Verfahrens nach einem der Ansprüche 1-11, wenn das Programm von der Steuereinheit nach Anspruch 12 ausgeführt wird.

15. Computerlesbares Medium mit einem Computerprogramm, das Programmcodemittel zum Durchführen des Verfahrens nach einem der Ansprüche 1-11 umfasst, wenn das Programmprodukt auf der Steuereinheit nach Anspruch 12 ausgeführt wird.

## Revendications

1. Procédé pour déterminer une séquence de démarrage pour un arrangement de piles à combustible (1) comprenant une pluralité de systèmes de piles à combustible (10), ladite séquence de démarrage comprenant les informations suivantes pour chaque système de piles à combustible (10) dans ledit arrangement de piles à combustible (1) : si le système de piles à combustible (10) doit être démarré ou non et, si le système de piles à combustible (10) doit être démarré, l'heure de démarrage du système de piles à combustible (10) est déterminée à l'aide des données suivantes :
- un besoin de puissance et/ou d'énergie requis de la pile à combustible (1) sur une plage temporelle à venir ;
- une durée d'arrêt de chaque système de pile à combustible (10), indiquant le temps écoulé depuis que le système de pile à combustible (10) a été dernièrement arrêté, et
- une caractéristique de dégradation prédéterminée de chaque système de pile à combustible (10) en fonction de la durée d'arrêt.

2. Procédé selon la revendication 1, dans lequel ladite caractéristique de dégradation permanente prédéterminée comprend une fenêtre temporelle de dégradation dépendant du temps (TDD) pour le système de pile à combustible (10) correspondant à la durée d'arrêt du système de pile à combustible (10) après quoi l'augmentation d'une valeur de dégradation, indicative de la dégradation permanente, est jugée insignifiante, ladite fenêtre temporelle de dégradation (TDD) dépendant du temps étant prédéterminée pour le système de pile à combustible (10) dans ledit arrangement de pile à combustible (1).

3. Procédé selon la revendication 2, dans lequel ladite fenêtre temporelle de dégradation dépendant du temps (TDD) est prédéterminée en utilisant des informations concernant ledit arrangement de piles à combustible (1) et/ou ledit système de piles à combustible (10) comprenant un ou plusieurs éléments parmi : une conception de système de piles à combustible, un nombre de systèmes de piles à combustible (10) dans l'arrangement de piles à combustible (1), une utilisation prévue du système de piles à combustible (10), et/ou une stratégie d'arrêt prévue du système de piles à combustible (10).

4. Procédé selon l'une quelconque des revendications 1 à 3, dans lequel ladite séquence de démarrage est déterminée en tenant compte d'un historique d'utilisation de chaque système de pile à combustible (10) et/ou ladite fenêtre temporelle de dégradation dépendant du temps (TDD) est prédéterminée en utilisant des informations concernant ledit système de pile à combustible (10) comprenant un historique d'utilisation dudit système de pile à combustible (10).

5. Procédé selon l'une quelconque des revendications précédentes, dans lequel ladite séquence de démarrage est déterminée de telle sorte que chaque système de pile à combustible (10) qui doit être démarré à une heure de démarrage pour ledit système de pile à combustible (10) doive est continuer à fonctionner pendant le reste de ladite plage temporelle suivante après ladite heure de démarrage.

6. Procédé selon l'une quelconque des revendications précédentes, dans lequel ladite séquence de démarrage est déterminée de telle sorte que ledit besoin de puissance/énergie requis de l'arrangement de piles à combustible (1) sur ladite plage temporelle à venir soi et t délivré à partir dudit arrangement de piles à combustible (1).

7. Procédé selon l'une quelconque des revendications précédentes, dans lequel ladite séquence de démarrage est déterminée en tenant compte d'informations sur l'efficacité du système de pile à combustible (10) à différents niveaux de puissance de fonctionnement.

8. Procédé selon l'une quelconque des revendications précédentes, dans lequel ladite séquence de démarrage est en outre déterminée en tenant compte d'une stratégie de dégradation permanente prédéterminée pour les systèmes de piles à combustible (10) de l'arrangement de piles à combustible (1).

9. Procédé selon l'une quelconque des revendications précédentes, dans lequel ledit besoin de puissance/énergie requis de l'arrangement de pile à combustible (1) est basé sur une valeur estimée dudit besoin de puissance/énergie sur ladite plage temporelle à venir.

10. Procédé selon la revendication 9, dans lequel ledit besoin de puissance/énergie requis de l'arrangement de pile à combustible (1) est basé sur ladite valeur estimée plus une marge prédéterminée.

11. Procédé de commande d'un arrangement de piles à combustible (1) comprenant une pluralité de systèmes de piles à combustible (10), le procédé comprenant la commande des systèmes de piles à combustible (10) selon une séquence de démarrage déterminée par le procédé selon l'une quelconque des revendications 1 à 10.

12. Unité de commande destinée à commander un arrangement de piles à combustible (1) comprenant une pluralité de piles à combustible (10), ladite unité de commande (30) étant configurée pour exécuter les étapes du procédé selon l'une quelconque des revendications précédentes, ladite unité de commande (30) étant de préférence en communication avec ledit arrangement de piles à combustible (1).

13. Véhicule comprenant un arrangement de piles à combustible (1) comprenant une pluralité de systèmes de piles à combustible (10) et étant en communication avec une unité de commande (30) selon la revendication 12.

14. Programme informatique comprenant un moyen de code de programme pour exécuter le procédé selon l'une quelconque des revendications 1 à 11 lorsque ledit programme est exécuté sur l'unité de commande selon la revendication 12.

15. Support lisible par ordinateur comportant un programme informatique comprenant un moyen de code de programme pour exécuter le procédé selon l'une quelconque des revendications 1 à 11 lorsque ledit produit de programme est exécuté sur l'unité de commande selon la revendication 12.
